# EUROPEAN PATENT APPLICATION

(11) **EP 4 527 180 A1**
(43) Date of publication of application: **26.03.2025**
(21) Application number: 24199734.5
(22) Date of filing: 11.09.2024
(51) Int. Cl.: A01D 41/127, A01D 43/073, A01D 43/08

(54) **HARVESTING MACHINE CONTROL**

(30) Priority: 20.09.2023 GB 202314418
(71) Applicant: AGCO International GmbH, 8212 Neuhausen am Rheinfall (CH)
(72) Inventor: KAISER, Johannes, 87616 Marktoberdorf (DE); JENINGA, Jasper, 87616 Marktoberdorf (DE)
(74) Representative: AGCO Intellectual Property Department

(57) **Abstract**

Systems and methods are provided for controlling operation of one or more operable components of or otherwise associated with a crop transfer device of an agricultural harvesting machine. Data indicative of a position of an unloading spout of the crop transfer device is used to determine an operational setting for a crop transfer device for controlling a discharge trajectory of material from the unloading spout. One or more operable components of or otherwise associated with the crop transfer device can be controlled accordingly.

## Description

### CROSS-REFERENCE TO RELATED APPLICATIONS

Not applicable.

### FIELD

Embodiments of the present disclosure relate generally to a control system and method for controlling operation of a harvesting machine.

### BACKGROUND

During a harvesting operation, specifically harvesting forage crop, an operator may utilise a forage harvester to cut and collect the crop material, optionally processes it in some manner and then discharge or unload the harvested crop material via a crop transfer system (unloading auger, spout or the like) into an adjacent trailer or collection vehicle. Depending on the operational scenario, the trailer may follow substantially behind the harvester so as not to travel across unharvested portions of the field (which may otherwise damage the crop). In other scenarios it may be possible to unload sideways, e.g. where the trailer traverses a previously cut crop row. The side-unloading scenario may be preferable from a fuel consumption and machine componentry wear and tear point of view as the harvested crop material may require to be discharged or unloaded over a shorter distance and as the trailer is able to be positioned more closely to the harvester.

Known systems may provide a pivotable unloading spout, enabling the operator to move the spout to a desired position. Further systems may automate the movement of the spout between these two positions / setups, e.g. through interaction with a user interface or display terminal in the operator cab of the machine. However, no complete solution has been provided.

It is an aim of embodiments of the present disclosure to build on known solutions and look to overcome or at least partly mitigate one or more problems associated therewith.

### BRIEF SUMMARY

In an aspect of the disclosure, there is provided a control system for controlling operation of one or more operable components of or otherwise associated with crop transfer device of an agricultural harvesting machine, the control system comprising one or more controllers, and being configured to: receive data indicative of a position of an unloading spout of the crop transfer device with respect to the harvesting machine; determine, in dependence on the received data, an operational setting for a crop transfer device for controlling a discharge trajectory of material from the unloading spout; and generate one or more control signals for controlling operation of one or more operable components of or otherwise associated with the crop transfer device in accordance with the determined operational setting.

Advantageously, the system of the present disclosure utilises a position of the unloading spout to control the crop transfer device settings, or settings associated therewith. In this manner, the position of the spout, e.g. an angular position of the spout, can be used as an input to the system to ensure the material is propelled from the spout at a necessary trajectory, e.g. with a certain speed to clear the harvesting machine and, for example, land in an adjacent or following collection vehicle. Having the ability to reduce the discharge speed, e.g. where a collection vehicle follows alongside the harvesting machine during side unloading, may allow for the operable components of the accelerator to operate at a reduced speed reducing wear and improving fuel consumption.

The one or more controllers may collectively comprise an input (e.g. an electronic input) for receiving one or more input signals. The one or more input signals may comprise data indicative of the position of the unloading spout, for example. The one or more controllers may collectively comprise one or more processors (e.g. electronic processors) operable to execute computer readable instructions for controlling operation of the control system, for example, to determine the operational setting for the crop transfer device. The one or more processors may be operable to generate one or more control signals for controlling operation of the one or more operable components. The one or more controllers may collectively comprise an output (e.g. an electronic output) for outputting the one or more control signals.

In embodiments, the position of the unloading spout may comprise an orientation of the unloading spout. This may be an angular position of the unloading spout, for example, which may be determinable with respect to a longitudinal axis of the harvesting machine.

The unloading spout may be moveable with respect to the longitudinal axis of the machine between a maximum displacement left or right of the machine (with respect to the direction of travel) and a minimum displacement which may correspond to a position whereby the unloading spout is positioned substantially along the longitudinal axis with a discharge direction towards the rear of the machine.

The unloading spout may be moveable in a continuous manner between any position corresponding to this maximum and minimum displacement. The one or more controllers may be configured to apply a corresponding proportional adjustment to the operational setting(s) of the one or more operable components in dependence on the position of the unloading spout across this range of positions.

In some embodiments the unloading spout may be moveable between a series of discrete positions, which may include two or more positions of the unloading spout. The two or more positions may, for example, correspond to a side unloading configuration where the spout is positioned to the left or right hand side of the machine with respect to the direction of travel of the agricultural machine, in use, for ejecting material into a container/trailer positioned alongside the machine and a rear unloading configuration where the spout is position behind the machine for ejecting material to the rear thereof. The one or more controllers may be configured to select between a set of operational settings corresponding to each of the set positions of the unloading spout. In embodiments, this may include switching between a side unloading configuration and a rear unloading configuration, for example.

The position of the unloading spout may comprise a vertical position of the unloading spout. This may include an orientation of the unloading spout determinable with respect to a vertical axis, for example.

The position of the unloading spout may be user controllable, e.g. through use of a user interface. The position of the unloading spout may be at least partly automated, e.g. under control of an automated guidance system for controlling an unloading operation associated with the harvesting machine. The one or more controllers may be configured to receive data indicative of the unloading spout position from the automated guidance system. In other embodiments, the data may be received from a sensing arrangement for determining a position of the unloading spout directly.

The trajectory of the crop material may comprise a directional component. This may include a discharge angle for the crop material from the unloading spout. The discharge angle may be determinable (and optionally controllable in the manner discussed herein) with respect to horizontal axis. Advantageously, the control system described herein may be configured for controlling a direction at which material is discharged (e.g. higher or lower) from the machine in dependence on the position of the unloading spout.

The trajectory of the crop material may comprise a speed component. Advantageously, a higher speed may be applied to the crop material where the collection vehicle is positioned further away, e.g. as may be the case when rear unloading when compared with side unloading.

The crop transfer device may comprise a conveyor, auger or the like. The crop transfer device may include an accelerator system, which may otherwise be referred to as a post-accelerator for providing an additional propulsive force to the crop material passing through the crop transfer device.

The one or more controllers may be configured to control one or more operational parameters of the post-accelerator in dependence on the position of the unloading spout. This may include controlling an operational speed of one or more operable components thereof. This may include controlling a rotational speed of one or more operable elements, such as a fan or the like for generating an airflow for providing the propulsive force to the crop material. The one or more controllers may be configured to control an operational speed of one or more paddles or the like which apply a propulsive force to the crop material through direct contact with the material. The one or more controllers may be operable to adjust a clearance or size of a flow path for the crop material. This may include controlling the operable position of one or more components of the post-accelerator to define the crop flow path.

The crop transfer device may comprise a flap or the like at an end of the unloading spout for defining the size and/or shape of the opening through which crop material is discharged, in use. Adjusting the size and/or shape of the opening may in turn control a trajectory of the discharged crop material. The one or more controllers may be configured for controlling an operational parameter, e.g. a position, of the flap in dependence on the determined position of the unloading spout.

The one or more operable components may include a user interface. The user interface may, for example, comprise a display terminal of the agricultural machine. The user interface may comprise a user device, such as a smartphone or tablet computer, for example. The one or more controllers may be configured to control operation of the user interface, e.g. by controlling display of a graphical representation thereon indicative of the determined position of the unloading spout and/or the operational setting(s) for operable components associated with the crop transfer device. In an at least partly automated system, the graphical representation may be provided for information purposes to inform an operator of the machine of the automated adjustments made to the crop transfer device settings based on the spout position. In other embodiments the one or more controllers may be configured to provide one or more instructions or suggested adjustments to operational setting(s) associated with the crop transfer device. For example, the user interface may be used to suggest an increase in a post-accelerator speed where a rear unloading operation is determined to be taking place, or a suggestion to reduce said speed for side unloading operation. This may advantageously advise the operator where fuel savings may be achieved, for example.

The control system, or specifically one or more controllers thereof, may be configured to receive additional operational data and control the operable component(s) of or otherwise associated with the crop transfer device accordingly.

The additional operational data may include crop data indicative of one or more measurable parameters of the crop material. This may include a dry matter content, or a crude ash content for the crop material, which may be determined, for example, utilising a sensor setup within the crop stream within the agricultural harvesting machine. The one or more measurable parameters of the crop material may include a crop type. This may be input by an operator, for example. The one or more measurable parameters of the crop material may comprise a cut length. The cut length may be measured directly or may be inferred through operational settings of a chopper tool, a header and or a conditioner of the harvesting machine, for example. Different crop types or crop material with different properties, moisture content etc. may move differently through the machine. Hence, a different propulsive force may need to be applied to the material to achieve the same throw distance. Advantageously, the present solution may account for different in crop material type and/or properties and adjust the crop transfer device setting(s) accordingly to achieve the desired discharge trajectory.

The additional operational data may relate to operable components of the harvesting machine itself. In use, different components of the machine, such as a header, chopper tool, conditioner etc. may each apply a propulsive force to the crop material passing therethrough. Advantageously, the present solution may utilise such settings to control any additional propulsive force required to achieve a desired crop trajectory from the unloading spout.

A further aspect of the invention provides an agricultural machine comprising the control system of any aspect described herein. The agricultural machine may comprise a harvesting machine, such as a combine or forage harvester, for example.

A further aspect of the invention provides a method of controlling operation of one or more operable components of or otherwise associated with a crop transfer device of an agricultural harvesting machine, comprising: receiving data indicative of a position of an unloading spout of the crop transfer device; determining, in dependence on the received data, an operational setting for a crop transfer device for controlling a discharge trajectory of material from the unloading spout; and controlling operation of one or more operable components of or otherwise associated with the crop transfer device in accordance with the determined operational setting.

The method may comprise performing any one or more of the functionalities of the control system described hereinabove.

A further aspect of the invention provides computer software comprising computer readable instructions which, when executed by one or more electronic processors, causes performance of a method in accordance with any aspect described herein.

A yet further aspect of the invention provides a computer readable medium having the computer software of the preceding aspect of the invention stored thereon.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified side view illustrating a harvesting machine embodying aspects of the present disclosure;
FIG. 2 is a simplified top view illustrating the operational use of aspects of the present disclosure;
FIG. 3 is a schematic illustration of a control system of the present disclosure; and
FIGs. 4A and 4B are further simplified top views illustrating the operational use of aspects of the present disclosure.

### DETAILED DESCRIPTION

The present disclosure relates to a control system 100 and associated method are provided for controlling operation of one or more operable components of or otherwise associated with a crop transfer device of an agricultural harvesting machine, here in the form of a forage harvester 2. Data indicative of a position of an unloading spout 22 of the crop transfer device is used to determine an operational setting for the crop transfer device for controlling a discharge trajectory of material from the unloading spout 22. One or more operable components of or otherwise associated with the crop transfer device can be controlled accordingly, including an accelerator 20, or a user interface in the form of a display terminal 28 in an operator cab 26 of the forage harvester 2.

### Harvester

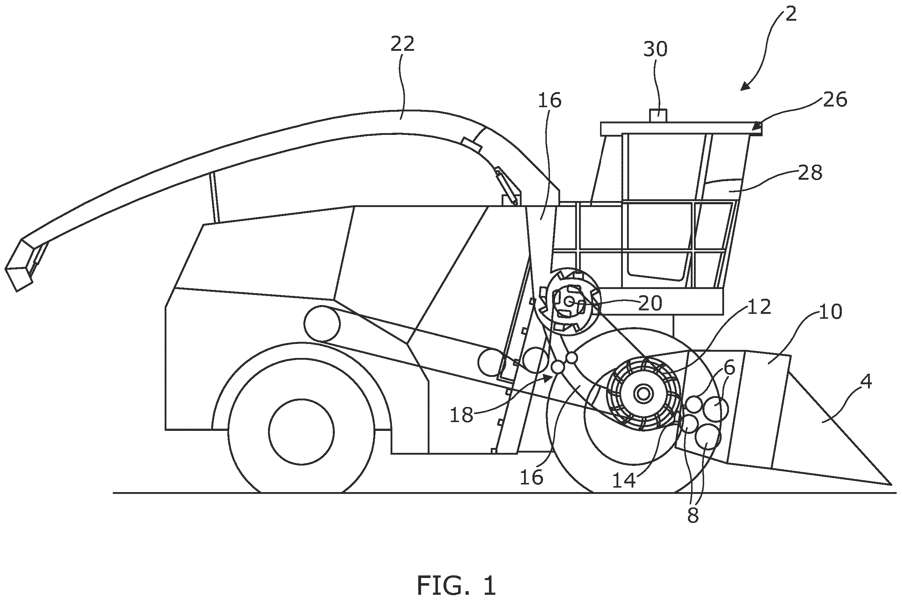

FIG 1 illustrates an agricultural harvesting machine in the form of a forage harvester 2. The forage harvester 2 is provided with a front attachment, here a header 4 comprising cutting equipment for cutting and harvesting a crop from a working environment. The cut crop is fed from the header 4 via associated feed rollers 6, 8 in a housing 10 to a chopper drum 12 where the crop is chopped into smaller pieces between the chopper drum 12 and an associated shear bar 14. The chopped crop passes through a duct 16 and is optionally directed into a cracker unit 18 where the crop is further crushed and threshed. The harvested crop is then blown upwards along the duct 16 by an accelerator 20 and exits through a spout 22 directing the processed crop into a trailer or other vehicle moving alongside the forage harvester 2, as is discussed herein.

The forage harvester 2 is further provided with an operator's cab 26. A user interface in the form of a display terminal 28 is located within the operator's cab 26 to communicate information to the operator regarding the operation of the forage harvester 2, and specifically under control of the control system 100 in the manner discussed herein for communicating information to the operator regarding the operational state of the control system 100, unloading spout 22, amongst other things. In alternative embodiments, the user interface may instead be provided on a portable electronic device carried by the operator, such as a smart phone or tablet computer utilising application software stored or otherwise accessible by the remote user device.

### Operational Use

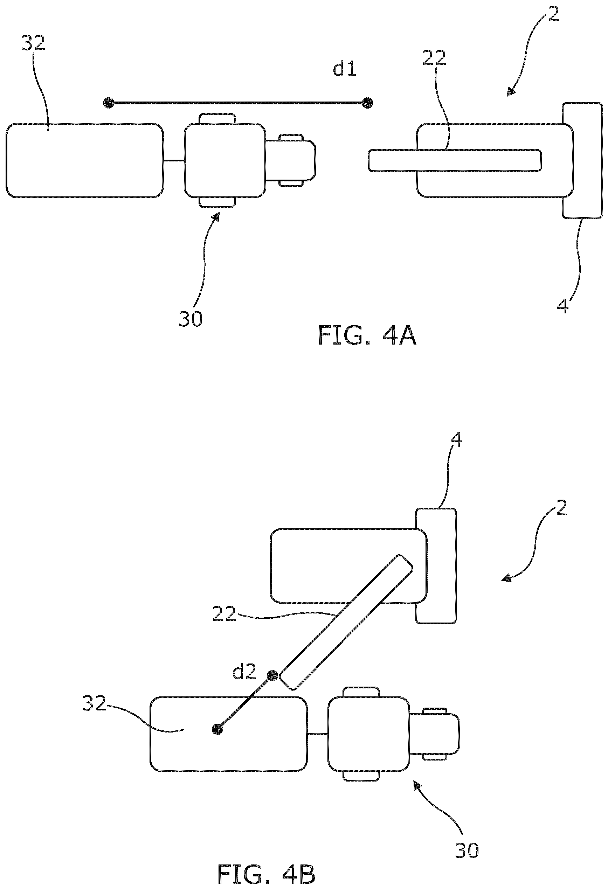

As discussed, in use, the forage harvester 2 is configured to cut and collect crop material from a working environment, process that material through further chopping, conditioning and/or threshing, before being unloaded from the machine through an unloading spout 22. Material ejected from the machine is typically directed into a collection vehicle, shown here as a tractor 30 and specifically into a trailer 32 towed by the tractor 30 - see Figs. 4A and 4B which travels either behind (FIG. 4A) or alongside (FIG. 4B) the harvester 2 such that the harvester 2 can continue to cut and collect further crop material whilst simultaneously unloading into the trailer 32.

Typically, a collection vehicle such as tractor 30 may follow behind the harvester 2 in a scenario whereby travelling alongside the harvester 2 is not possible, e.g. to prevent the tractor 30 traversing unharvested portions of the field which would otherwise damage the crop. This may be the case whilst the harvester 2 is performing a headland pass for instance when initially working on the field. Such a working mode may be referred to herein as a "rear-unloading" operation.

In the majority of cases, it is desirable for the tractor 30 to instead follow alongside the harvester 2, such as in the scenario in FIG. 4B - herein referred to as a "side-unloading" operation. This may be possible where the tractor 30 is able to travel alongside a previously harvested row, for example. This working operation may be desirable to reduce fuel consumption and wear and tear on the operational components of the harvester 2, and in particular on the accelerator 20. This saving can be realized as the "throw" distance d1, d2 required for material to pass from the end of the unloading spout 22 to land inside the trailer 32 is significantly shorter in a side-unloading operation. This means that the discharge speed needed to be imparted on the crop material is much reduced, allowing for the related components to be operated at a lower operational speed. However, as discussed herein, it is still advantageous to provide a rear-unloading operational state as well, such that material can be discharged into the trailer 32 in all scenarios and without damaging any unharvested crop.

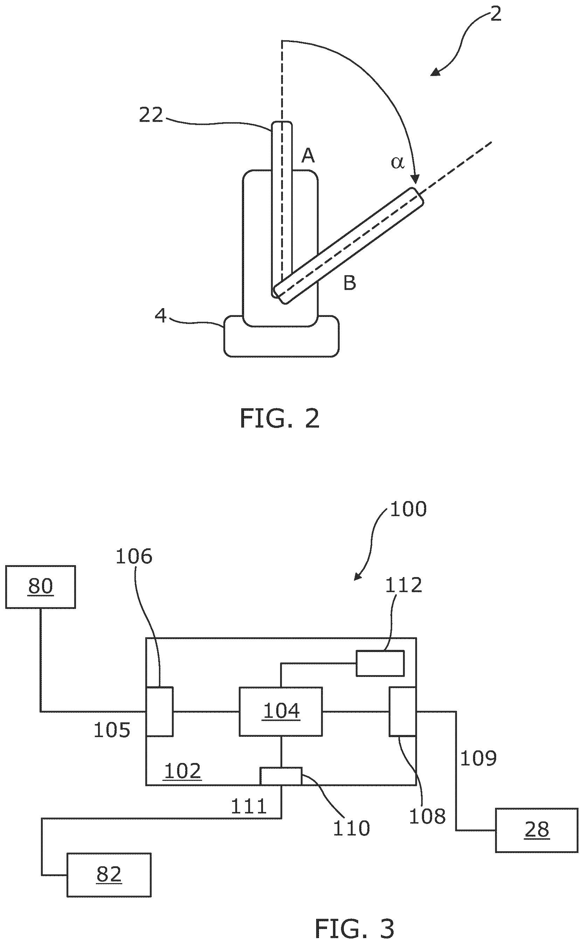

Advantageously, the forage harvester 2, and specifically the unloading spout 22 thereof is pivotably mounted such that it can be operated in both a rear-unloading operational state and a side-unloading operational state depending on the operational scenario of the harvester 2. This is illustrated figuratively in FIG. 2 where the spout 22 is rotatable about an angle α between a minimum angular displacement - represented here by state "A" - and a maximum angular displacement - represented here by state "B". It will be appreciated that in some instances the unloading spout may be rotatable to an equivalent maximum angular displacement on the opposing side of the harvester 2 as shown in FIG. 2, depending on which side the tractor 30 is being driven in any given harvesting scenario.

As discussed herein, embodiments of the present disclosure utilise the position of the unloading spout - in the illustrated embodiments the position being the angular displacement of the unloading spout 22 - for controlling operation of one or more operable components associated with the forage harvester 2, which may include the accelerator 20, user interface 28 or other components as discussed. Additional position parameters may be used, such as a angular position of the spout in a vertical direction.

Here, the position of the unloading spout 22 is determined through receipt of data signals from a local control unit 80 of the unloading spout 22, indicative of the angular displacement thereof. A direct measure of the angular displacement may be obtained through dedicated sensory equipment, which may include a rotary potentiometer or the like, for example. Data from such as sensor setup may be fed into the local control unit 80 and onto the control system 100 therefrom, or the control system 100 may have a direct input from the sensor setup such that a direct measure of the angular displacement of the unloading spout 22 can be determined. The present disclosure is not limited in this sense.

The unloading spout 22 illustrated here is moveable in a continuous manner between any position corresponding to the maximum (B) and minimum (A) displacement. The control system 100 is configured to apply a corresponding proportional adjustment to the operational setting(s) of the one or more operable components -see the discussion hereinbelow - in dependence on the position of the unloading spout 22 across this range of positions. However, in a variant, the unloading spout 22 is instead moveable between a series of discrete positions, which may include two (or more) positions of the unloading spout 22. In its simplest setup, the two or more positions correspond to a side unloading configuration where the spout 22 is positioned to the left or right hand side of the harvester 2, as shown in FIG. 4B, for ejecting material into a trailer 32 positioned alongside the harvester 2 and a rear unloading configuration where the spout 22 is position behind the machine for ejecting material to the rear thereof (FIG. 4A). In such instances, the control system 100 is instead configured to select between a set of operational settings corresponding to each of the set positions of the unloading spout 22. In practice, this would include switching between a side unloading configuration and a rear unloading configuration for the operable component(s).

The crop transfer device here includes an accelerator 20 or "post-accelerator" for providing an additional propulsive force to the crop material passing through the crop transfer device and through the unloading spout 22. In the illustrated embodiment, the control system 100 is configured to control one or more operational parameters of the accelerator 20 in dependence on the position of the unloading spout 22. This can include controlling a rotational speed of one or more operable elements of the accelerator 20, here blades forming a fan for generating an airflow for providing the propulsive force to the crop material. By adjusting the rotational speed of the fan blades a different discharge speed and hence throw distance and thereby a trajectory of the crop material can be achieved. It is envisaged that in a rear-unloading operation, for example, the fan speed may be set at a relatively higher level compared with a side-unloading operation to achieve an increased discharge speed and throw distance as required when unloading to a trailing collection vehicle. As discussed, the unloading spout 22 can be moved in a continuous manner between an unlimited number of positions between the minimum and maximum displacements A, B. The fan speed of the accelerator 20 can therefore advantageously be reduced in a proportional manner when moving from the minimum to maximum displacements to achieve a corresponding proportional decrease in the discharge speed and effective trajectory of the crop material as required by the harvesting operation.

Additional adjustments of the accelerator 20 or associated components of the unloading spout 22 may include controlling or adjusting a clearance or size of a flow path for the crop material into and through the unloading spout 22, again effecting a desired change in the discharge speed and throw distance. In further variants the unloading spout 22 may comprise a flap or the like at an end thereof for defining the size and/or shape of the opening through which crop material is discharged, in use. Adjusting the size and/or shape of the opening may in turn control a trajectory of the discharged crop material.

Here, the control system 100 is additionally configured to control operation of the display terminal 28, by controlling display of a graphical representation thereon indicative of the determined position of the unloading spout and/or the operational setting(s) for operable components associated with the unloading spout 22. In an at least partly automated system, the graphical representation can be provided for information purposes to inform an operator of the machine of the automated adjustments made to the crop transfer device settings based on the spout 22 position. The graphical representation may be used to provide one or more instructions or suggested adjustments to operational setting(s) associated with the crop transfer device. For example, the display terminal 28 can be used to suggest an increase in an accelerator 20 speed where a rear unloading operation is determined to be taking place, or a suggestion to reduce said speed for side unloading operation.

### Control System

FIG 3 illustrates an embodiment of a control system 100 of the present disclosure. As discussed herein, the control system 100 comprises a controller 102 operably connected to local control unit 80 of the unloading spout 22 of the harvester 2. The control system 100 is configured for controlling one or more operational components 28, 82 associated with the harvester 2 in the manner discussed herein. In the illustrated embodiment, the controllable operational components include a local control unit 82 of the accelerator 20 for controlling an operational speed thereof to achieve a desired crop material trajectory, and a user interface 28 associated with the harvester 2, which as discussed is provided as a display terminal 28 in the operator cab 26 of the harvester 2 to provide a graphical representation illustrative of the operation of the control system 100, again as discussed herein.

Control system 100 comprises a controller 102 having an electronic processor 104, an electronic input 106 and electronic outputs 108, 110. The processor 104 is operable to access a memory 112 of the controller 102 and execute instructions stored therein to perform the steps and functionality of the present disclosure discussed herein, e.g. by controlling the display terminal 28 to provide the graphical representation, and/or controlling operation of operable components, e.g. accelerator 20.

The processor 104 is operable to receive data from the local control unit 80 of the unloading spout 22 via input 106 which, in the illustrated embodiment, takes the form of input signals 105. The data is indicative of a position and specifically an angular displacement of the unloading spout 22 with respect to a longitudinal axis of the harvester 2. As discussed herein, the local control unit 80 may be communicable with a sensor setup, e.g. a rotary potentiometer, for obtaining the angular displacement measure.

The processor 104 is configured to analyse the data and determine therefrom any necessary adjustment in the operational state of one or more components of or otherwise associated with the unloading spout 22 for controlling the trajectory of crop material therefrom.

Controller 102 includes an electronic output 110 configured to output control signals 111 generated by the processor 104 for controlling operation of the accelerator 20 via accelerator control unit 82. Specifically, processor 104 is operable to generate, and the controller 102 operable to then output via output 1110, control signals 111 to the accelerator control unit 82 for controlling operable components thereof, specifically here the fan speed of the accelerator 20.

Output 108 is operably coupled to the display terminal 28. Control system 100 is operable to control operation of the display terminal 28 e.g. through output of control signals 109 in order to display data to an operator of the harvester 2 relating to the operation of the control system 100. Specifically, the control system 100 is operable to control the display terminal 28 to display to the operator a representation of the angular displacement of the unloading spout 22, or information relating to suggested or necessary adjustments to the crop transfer device as a whole, or specifically the accelerator 20 settings for achieving a desired crop material trajectory.

In an extension of the above-described embodiments, the display terminal 28 may additionally be used as a user interface for controlling the position of the unloading spout. For example, the display terminal 28 may be used by an operator to select an unloading mode for the harvester 2.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A control system for controlling operation of one or more operable components of or otherwise associated with a crop transfer device of an agricultural harvesting machine, the control system comprising one or more controllers, and being configured to:
receive data indicative of a position of an unloading spout of the crop transfer device with respect to the harvesting machine;
determine, in dependence on the received data, an operational setting for a crop transfer device for controlling a discharge trajectory of material from the unloading spout; and
generate one or more control signals for controlling operation of one or more operable components of or otherwise associated with the crop transfer device in accordance with the determined operational setting.

2. A control system of claim 1, wherein the position of the unloading spout comprises an angular position of the unloading spout determinable with respect to a longitudinal axis of the harvesting machine.

3. A control system of claim 2, wherein the unloading spout is moveable with respect to the longitudinal axis of the machine between a maximum displacement left or right of the machine (with respect to the direction of travel) and a minimum displacement which may correspond to a position whereby the unloading spout is positioned substantially along the longitudinal axis with a discharge direction towards the rear of the machine.

4. A control system of claim 3, wherein the unloading spout is moveable in a continuous manner between any position corresponding to the maximum and minimum displacement; and wherein the one or more controllers are configured to apply a corresponding proportional adjustment to the operational setting(s) of the one or more operable components in dependence on the position of the unloading spout across this range of positions.

5. A control system of claim 3, wherein the unloading spout is moveable between a series of discrete positions; and wherein the one or more controllers are configured to select between a set of operational settings corresponding to each of the set positions of the unloading spout.

6. A control system of claim 5, wherein the series of discrete positions include two or more positions of the unloading spout corresponding to a side unloading configuration where the spout is positioned to the left or right hand side of the machine with respect to the direction of travel of the agricultural machine, in use, and a rear unloading configuration where the spout is position behind the machine for ejecting material to the rear thereof; and wherein the one or more controllers are configured to select between a set of operational settings corresponding to a side unloading configuration and a rear unloading configuration.

7. A control system of any preceding claim, wherein the position of the unloading spout comprises a vertical position of the unloading spout determinable with respect to a vertical axis, for example.

8. A control system of any preceding claim, wherein the trajectory of the crop material comprises a directional component and/or a speed component.

9. A control system of any preceding claim, wherein the crop transfer device includes a post-accelerator for providing an additional propulsive force to the crop material passing through the crop transfer device; and wherein the one or more controllers are configured to control one or more operational parameters of the post-accelerator in dependence on the position of the unloading spout.

10. A control system of claim 9, wherein the one or more controllers are configured to control an operational speed of one or more operable components of the post-accelerator, including controlling one or more of:
a rotational speed of one or more operable elements for generating an airflow for providing the propulsive force to the crop material;
an operational speed of one or more paddles or the like which apply a propulsive force to the crop material through direct contact with the material; and
a clearance or size of a flow path for the crop material.

11. A control system of any preceding claim, wherein the crop transfer device comprises a flap or the like at an end of the unloading spout for defining the size and/or shape of the opening through which crop material is discharged, in use; and wherein the one or more controllers are configured for controlling an operational parameter of the flap in dependence on the determined position of the unloading spout.

12. A control system of any preceding claim, wherein the one or more operable components includes a user interface; and wherein the one or more controllers are configured to control operation of the user interface by controlling display of a graphical representation thereon indicative of the determined position of the unloading spout and/or the operational setting(s) for operable components associated with the crop transfer device.

13. A control system of any preceding claim, wherein the one or more controllers are configured to receive additional operational data; and control the operable component(s) of or otherwise associated with the crop transfer device in dependence thereon;
wherein the additional operational data:
includes crop data indicative of one or more measurable parameters of the crop material, including one or more of: a dry matter content; a crude ash content for the crop material; a crop type; and a cut length; and/or
relates to operable components of the harvesting machine itself, including operational states of one or more of a header, a chopper tool, and a conditioner of the harvesting machine.

14. An agricultural machine comprising or being controllable by the control system of any preceding claim.

15. A method of controlling operation of one or more operable components of or otherwise associated with a crop transfer device of an agricultural harvesting machine, comprising:
receiving data indicative of a position of an unloading spout of the crop transfer device;
determining, in dependence on the received data, an operational setting for a crop transfer device for controlling a discharge trajectory of material from the unloading spout; and
controlling operation of one or more operable components of or otherwise associated with the crop transfer device in accordance with the determined operational setting.
